# EUROPÄISCHE PATENTSCHRIFT

(11) **EP 2 107 091 B1**
(45) Veröffentlichungstag und Bekanntmachung des Hinweises auf die Patenterteilung: **15.09.2010**
(21) Anmeldenummer: 08006867.9
(22) Anmeldetag: 04.04.2008
(51) Int. Cl.: C09D 201/00, C08L 101/00

(54) **Formulierung zum semi-permanenten Schutz von Oberflächen und deren Verwendung**
Formula for semi-permanent protection of surfaces and its use
Formule de protection semi-permanente de surfaces et son utilisation

(43) Veröffentlichungstag der Anmeldung: 07.10.2009
(73) Patentinhaber: Fraunhofer-Gesellschaft zur Förderung der angewandten Forschung e.V., 80686 München (DE); Zaklad Karbochemii Polska Akademia Nauk, 44-121 Gliwice (PL)
(72) Erfinder: Paulke, Bernd-Reiner, Dr., 14469 Potsdam (DE); Laschewsky, André, Dr., 14469 Potsdam (DE); Dworak, Andrzej, Prof., 41800 Zabrze (PL); Manczyk, Krzysztof, Ruda Slaska 41 700 (PL)
(74) Vertreter: Pfenning, Meinig & Partner GbR

(56) Entgegenhaltungen:
- WO-A-2005/007762
- DATABASE WPI Week 200604 Thomson Scientific, London, GB; AN 2006-030147 XP002494469 & CN 1 651 530 A (UNIV HUANAN TECHNOLOGY) 10. August 2005 (2005-08-10)

## Beschreibung

Die vorliegende Erfindung betrifft eine Formulierung zum semi-permanenten Schutz von Oberflächen enthaltend eine makromolekulare Komponente A mit negativer Nettoladung und eine makromolekulare Komponente B mit positiver Nettoladung, wobei die beiden Komponenten in Ladungswechselwirkung stehen. Die Nettoladung mindestens einer Komponente ist dabei pH-abhängig, so dass in einem Teilbereich der pH-Skala die Ladungswechselwirkung zwischen den Komponenten A und B aufgehoben wird. Ebenso betrifft die Erfindung eine Oberfläche mit einer semi-permeablen Beschichtung, die aus der Formulierung herstellbar ist. Verwendung findet die erfindungsgemäße Formulierung insbesondere zum Schutz von Oberflächen im Innen- und Außenbereich gegen mutwillige Verschmutzung oder die Einwirkung von Luftverschmutzungen. Besonders geeignet ist die Formulierung als Anti-Graffiti-Beschichtung.

Unerwünschte Graffiti sind nicht nur aus ästhetischen Gesichtspunkten ein Problem, sondern können auch den Untergrund in vielfältiger weise schädigen. Dies betrifft in besonderem Maße Graffiti, die auf Bauten, insbesondere auf Baudenkmälern aufgebracht werden. Abgesehen von negativen Auswirkungen auf Aspekte wie Ästhetik und Authentizität beeinträchtigen und schädigen die Wechselwirkungen von Graffiti die Bausubstanz. Dieses Problem ist besonders gravierend, wenn poröse Materialien verwendet wurden, wie Sandstein, Ziegel oder Kalkmörtel. Sie saugen die Graffiti-Farben auf, die sich dann nur noch extrem schwer entfernen lassen. Außerdem verschließen Graffiti die Poren der Materialien. Dadurch wird der natürliche Austausch und Transport von Wasserdampf aus dem Bauwerk behindert. Ein weiteres Problem stellen mögliche Schädigungen der Bausubstanz durch die notwendigen Reinigungsprozeduren dar.

Um die entsprechenden Gefahren für Bauten abzuwenden, werden polymere Sperrschichten zum Oberflächenschutz als Stand der Technik eingesetzt. Der Fachmann unterscheidet zwischen permanenten und temporären Sperrschichten. Permanente Sperrschichten werden einmalig aufgebracht und sind von ihren Eigenschaften so ausgelegt, dass Graffiti an ihrer Oberfläche bleiben und aufgrund einer niedrigen Oberflächenenergie nur schwach haften. So lassen sie sich unter Erhalt der Sperrschicht wieder entfernen. Aus der modernen Grenzflächenchemie sind verschiedene Zugangsmöglichkeiten zu niedrigen Oberflächenenergien bekannt. Wichtig ist ein möglichst hoher Bedeckungsgrad mit Kettensequenzen oder Molekülbausteinen, die Octyl- und längere Alkylgruppen, perfluorierte Alkylketten oder Silikon-basierte Reste tragen. Permanente Sperrschichten gegen Graffiti besitzen den Nachteil, dass sie sich nur mit großem Aufwand und dem Risiko von Schäden für den Untergrund wieder entfernen lassen. Des Weiteren versiegeln die üblichen permanenten Sperrschichten mit niedriger Oberflächenenergie den Bauuntergrund gegen den Transport von Wasserdampf. Dies führt bei porösen Materialien zu den gleichen Problemen, die Graffiti selber erzeugen.

Im Gegensatz zu permanenten Sperrschichten werden temporäre Sperrschichten als Opferschichten eingesetzt. Sie verhindern zwar, dass die Farbe in den Bauuntergrund eindringt. Zur Reinigung müssen diese Schichten aber mitsamt den Graffiti darauf bzw. darin entfernt werden. Für einen weiteren Schutz gegen Graffiti ist dann eine Sperrschicht notwendig. Dies ist arbeits- und kostenaufwendig.

In der WO 2005/007762 A1 ist eine Polyurethan-Polymer-Hybrid-Dispersion mit verbesserten Oberflächeneigenschaften, ein Verfahren zu ihrer Herstellung sowie deren Verwendung beschrieben.

Database WPI Week 200604 AN 2006-030147 entspricht CN-A-1 651 530 und beschreibt eine fluorierte Farbe mit niedriger Oberflächenenergie, die mittels Elektrophorese-Beschichtung aufgetragen wird sowie deren Herstellung.

Aufgabe der vorliegenden Erfindung war es daher, eine Formulierung zum Schutz von Oberflächen im Innen- und Außenbereich bereitzustellen, die unter üblichen Umweltbedingungen einen permanenten Schutz bietet, aber unter definierten Bedingungen ohne Schaden für die Oberfläche einfach und schonend entfernt werden kann.

Diese Aufgabe wird durch die Formulierung mit den Merkmalen des Anspruchs 1 und die Oberfläche mit einer semi-permeablen Beschichtung mit den Merkmalen des Anspruchs 15 gelöst. Die weiteren abhängigen Ansprüche zeigen vorteilhafte Weiterbildungen auf. In Ansprüche 16-17 werden erfindungsgemäße Verwendungen genannt.

Erfindungsgemäß wird eine Formulierung bereitgestellt, die eine makromolekulare Komponente A mit negativer Nettoladung und eine makromolekulare Komponente B mit positiver Nettoladung in mindestens einem Lösungsmittel enthält. Zumindest eine der beiden Komponenten liegt dabei in Form von Latexpartikeln vor. Weiterhin enthält mindestens eine der beiden Komponenten einen Rest ausgewählt aus der Gruppe bestehend aus C₄-C₃₀-Alkylgruppen, insbesondre C₄-C₁₈-Alkylgruppen, zumindest teilweise fluorierte C₄-C₁₈-Alkylgruppen, insbesondere fluorierte C₄-C₁₀-Alkylgruppen, Silikongruppen und Mischungen hiervon. Ein wesentlicher Punkt der vorliegenden Erfindung ist es dabei, dass die Nettoladung mindestens einer Komponente pH-abhängig ist, so dass in einem Teilbereich der pH-Skala die Komponenten A und B in Ladungswechselwirkung stehen und in dem restlichen Bereich der pH-Skala Ladungswechselwirkung zwischen den Komponenten A und B aufgehoben ist. So könnte beispielsweise die Ladungswechselwirkung in einem pH-Bereich von 0 bis 12 bestehen, während im pH-Bereich von 12 bis 14, also im alkalischen Bereich der pH-Skala, aufgehoben ist. Dies ermöglicht, dass eine Schicht aus dieser Formulierung unter üblichen Umweltbedingungen beständig ist, während sie durch Behandlung mit alkalischen Lösungsmitteln einfach und schonend entfernt werden kann.

Die vorliegende Erfindung beruht somit auf mindestens zwei makromolekular aufgebauten Komponenten A und B, die in einer Formulierung miteinander kombiniert werden und durch komplementäre elektrostatische Ladungen miteinander dauerhaft anziehend wechselwirken, so dass sie wasserunlöslich werden. Die makromolekulare Komponente A trägt somit eine negative Nettoladung, die Komponente B eine positive Nettoladung.

Zu diesen Grundkomponenten A und B können weitere niedermolekulare oder makromolekulare Stoffe zugesetzt werden, die dem Fachmann als Bestandteile von Anstrichen bekannt sind. Derartige Stoffe sind z. B. pH-Regler, wie Amine oder organische und anorganische Säuren, Tenside, Entschäumer, Biozide, UV-Absorber oder Hydrophobierungszusätze. Die Zusätze haben auch die Funktion, in wässriger Lösung die Komplexbildung der Komponenten A und B zu verhindern. Nach Auftragen der Formulierung auf einen mineralischen Untergrund entsteht eine zusammenhängende Schutzschicht mit niedriger Oberflächenenergie, die für flüssiges Wasser impermeabel, für Wasserdampf aber permeabel ist. Diese Schutzschicht ist als Außenanstrich unter Umweltbedingungen dauerhaft. Die Glasübergangstemperatur der verfilmten Polymere liegt unter 20°C.

Während unter Umweltbedingungen die Nettoladungen der Komponenten A und B komplementär und somit anziehend sind, ist dies durch den Einbau von schwachen Elektrolytgruppen im sauren oder im basischen Bereich ab einem bestimmten Schwellenwert des pH nicht mehr der Fall. Als schwache Elektrolytgruppen, speziell schwache Säuren und schwache Basen, werden chemische Reste bezeichnet, die in Wasser nur über einen Teil des pH-Bereichs von 2-12 als geladene Gruppen vorliegen. Schwache Säuren liegen nur oberhalb eines kritischen pH-Wertes in geladener Form vor, schwache Basen nur unterhalb eines kritischen pH-Wertes. Die Komponenten A und B der vorliegenden Erfindung sind chemisch so zusammengesetzt, dass eine der beiden Komponenten z.B. bei einem pH-Wert unterhalb von ≤ 4 soviel seiner negativen Nettoladung verliert bzw. oberhalb von pH ≥ 10 soviel seiner positiven Nettoladung verliert, dass die anziehende Wechselwirkung zwischen den Komponenten A und B zu gering wird, um das Auflösen der Schutzschicht durch eine Reinigungsformulierung, vorzugsweise ein Wasser-basiertes, auf den geeigneten pH eingestelltes Medium zu verhindern. Eine pH-Abhängigkeit der positiven Nettoladung der Komponente B wird dadurch erreicht, dass sie entweder schwache basische Gruppen enthält, oder in Gegenwart von starken basischen Gruppen eine mindestens äquivalente Zahl schwacher Säuregruppen, oder sowohl schwache basische als auch schwache Säuregruppen. Die pH-Abhängigkeit der negativen Nettoladung der Komponente A wird dadurch erreicht, dass sie entweder schwache Säuregruppen enthält, oder in Gegenwart von starken Säuregruppen eine mindestens äquivalente Zahl schwach basischer Gruppen, oder sowohl schwache Säuregruppen als auch schwache basische Gruppen.

Ein weiteres Charakteristikum der Erfindung ist, dass zumindest eine der beiden Komponenten A und B C₄-C₃₀-Alkylreste, teilfluorierte C₄-C₁₈-Alkylreste, perfluorierte C₄-C₁₈-Alkylreste, Silikon-basierte Reste oder eine beliebige Kombination derartiger Reste trägt. Die Reste können linear, verzweigt oder zyklisch sein und zusätzlich aromatische Gruppen tragen.

Die makromolekulare Komponente A ist bevorzugt eine wässrige Lösung oder Dispersion von Polymeren, die bevorzugt insgesamt mindestens ab einem pH-Wert von 4 negativ geladen sind. Komponente A kann durch radikalische Polymerisation mittels wässriger Lösungs-, Fällungs- oder Emulsionspolymerisation hergestellt werden. Optional werden die erhaltenen Polymerisate durch weitere chemische Reaktionen in der wässrigen Lösung oder Dispersion modifiziert. Der Polymergehalt der wässrigen Lösung oder Dispersion beträgt vorzugsweise 5-60 Gew.-%, bevorzugt 10-50 Gew.-% und besonders bevorzugt 20-40 Gew.-%.

Das Polymere der Komponente A besteht aus mindestens zwei verschiedenen Monomereinheiten A1 und A2, von denen A1 eine Säurefunktion oder deren Salz trägt, und A2 eine ungeladene Gruppe, wobei die Homopolymere, die sich von den diesen ungeladenen Monomereinheiten ableiten, wasserunlöslich sind. Diese Art von Monomereinheit A2 wird im Folgenden als hydrophob bezeichnet.

Der Anteil der Hydrophob-Einheiten A2 beträgt vorzugsweise mindestens 5 Gew.-%, bevorzugt mindestens 20 Gew.-% des Polymeren und ist vorzugsweise ausgewählt aus der Gruppe bestehend aus: 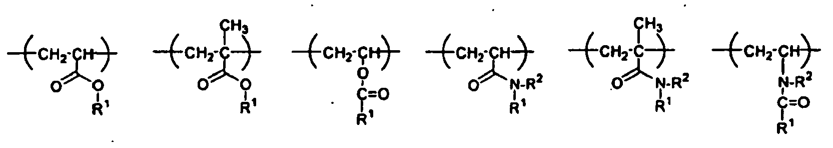 wobei R¹ ein Alkyl- oder Alkylaryl-Rest mit 1 bis 20 Kohlenstoffen ist, der seinerseits funktionelle Gruppen wie Fluoralkyl, Silan-, Siloxan-, Ester-, Amid, Urethan-, Ether-, Thioether, Disulfid-, Epoxy- oder ungesättigte Gruppen enthalten kann. Für R² gilt R² = H, R¹ oder dass R² ein anderer Rest aus der Gruppe der möglichen Reste für R¹ ist. Die Summe der Kohlenstoffe in R¹ und R² muss mindestens 4 betragen. Anstelle einer einzigen Hydrophob-Einheit kann auch eine beliebige Mischung davon verwendet werden.

Im Falle von gemischten Hydrophob-Einheiten können insgesamt bis zu 20 Gew.-% des Polymeren auch auf Hydrophob-Einheiten ausgewählt aus der Gruppe bestehend aus 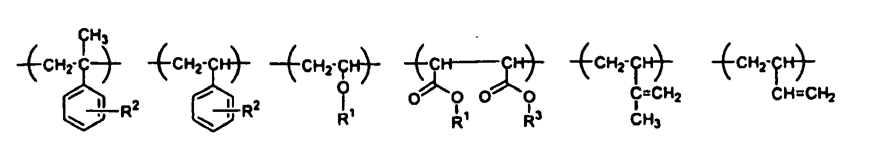 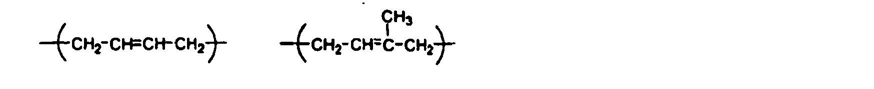 entfallen, wobei R³ den zuvor unter R¹ genannten Resten entspricht.

Die A2-Einheiten können gegebenenfalls auch vernetzend sein.

Die zweite Grund-Monomereinheit A1, die eine Säurefunktion aufweist, hat die allgemeine Struktur 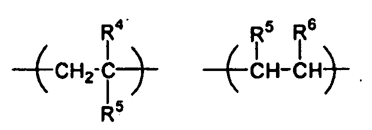 mit R⁴ = H, -CH₃. R⁵ ist ein Alkyl, Aryl oder Acyl-substituent, der mindestens Säurefunktion trägt, bevorzugt eine -COOH, -OSO₃H oder -SO₃H Funktion. Diese kann als freie Säure, als Alkalimetallsalz oder als Ammoniumsalz vorliegen. R⁶ ist ein Rest aus der Gruppe der für R⁴ oder R⁵ möglichen Reste.

Bevorzugte Monomereinheiten A1 sind 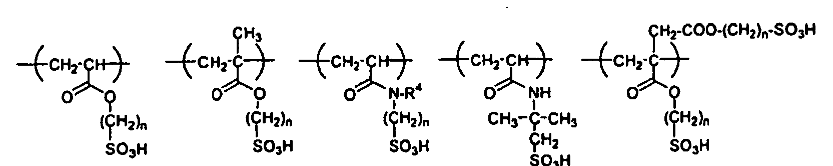 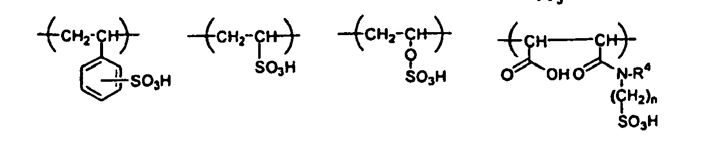 mit n=2,3, und R⁴ = H, -CH₃

Besonders bevorzugt sind Monomereinheiten A1 ausgewählt aus der Gruppe bestehend aus:

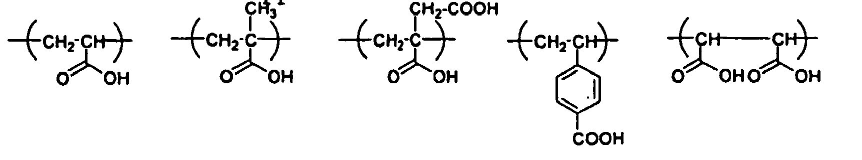

Die -COOH, -OSO₃H oder -SO₃H Funktion können anstatt als freie Säure auch als Alkalimetallsalz oder als Ammoniumsalz vorliegen. Die Monomereinheiten A1 können aus einer, oder aus einer Kombination mehrerer der oben angegebenen Strukturen bestehen.

Neben den beiden Grund-Monomereinheiten A1 und A2, die bevorzugt zusammen mindestens 80 Gew.-% und besonders bevorzugt mindestens 90 Gew.-% der makromolekularen Komponente A ausmachen, können eine oder mehrere zusätzliche Monomereinheiten A3 mit der allgemeinen Struktur 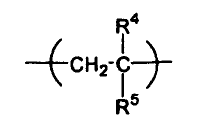 mit R⁴ = H, CH₃ und R⁵ = organischer Rest, insbesondere Alkyl-, Aryl- oder Acyl-Substituent, der mindestens eine kationisch geladene Gruppe, bevorzugt eine N⁺R⁷R⁸R⁹R¹⁰X⁻Gruppe trägt, enthalten sein.

Die Reste R⁷, R⁸, R⁹ und R¹⁰ stellen unabhängig voneinander H oder Reste dar, wie sie für R¹ beschrieben sind. Dabei gilt die Einschränkung, dass die Summe aller Kohlenstoffe der Reste R⁷, R⁸, R⁹ und R¹⁰ zusammen kleiner als 16 ist.

X⁻ stammt bevorzugt aus der Gruppe folgender Anionen: Cl⁻, Br⁻, NO₃⁻, SO₄²⁻, CH₃OSO₃⁻, C₂H₅OSO₃⁻, CH₃SO₃⁻ , CF₃SO₃⁻, H₂PO₄⁻, HPO₄²⁻, PO₄³⁻, HCO₃⁻, CO₃²⁻, CF₃COO⁻, HCOO⁻, CH₃COO⁻, C₂H₅COO⁻, Lactat, Tartrat, oder Citrat.

Bevorzugt sind A3-Einheiten, die eine Amin oder Ammoniumfunktion tragen oder die vernetzend wirken. Dabei ist zu beachten, dass die Anzahl der Säuregruppen der makromolekularen Komponente A bei pH-Werten > 4 höher ist als die Zahl möglicher kationischer Gruppen, die gegebenenfalls durch eine dritte oder weitere derartige Monomereinheit in das Polymer eingeführt wird.

Die Molmasse des Polymeren der Komponente A ist vorzugsweise größer als 5000 und bevorzugt größer als 20000. Besonders bevorzugt sind Molmassen von 50000 bis 3000000.

Die makromolekulare Komponente B ist vorzugsweise eine wässrige Lösung oder Dispersion von Polymeren, die insgesamt mindestens bis zu einem pH-Wert von 10 positiv geladen sind. Komponente B wird durch radikalische Polymerisation hergestellt mittels wässriger Lösungs-, Fällungs- oder Emulsionspolymerisation. Optional werden die erhaltenen Polymerisate durch weitere chemische Reaktionen in der wässrigen Lösung oder Dispersion modifiziert.

Das Polymere der Komponente B besteht vorzugsweise aus mindestens zwei verschiedenen Monomereinheiten B1 und B2, von denen B1 eine positiv geladene Funktion trägt. Die chemische Struktur der B2-Einheiten entspricht der der möglichen A2-Einheiten. Der Anteil der Hydrophob-Einheiten B2 beträgt vorzugsweise mindestens 5 Gew.-%, bevorzugt mindestens 20 Gew.-% des Polymeren. Der Polymergehalt der wässrigen Lösung oder Dispersion beträgt vorzugsweise 5-60 Gewichtsprozent, bevorzugt 10-50 Gewichtsprozent und besonders bevorzugt 20-40 Gewichtsprozent.

Die Grund-Monomereinheit B1, die eine Ammoniumfunktion aufweist, besitzt vorzugsweise die allgemeine Struktur 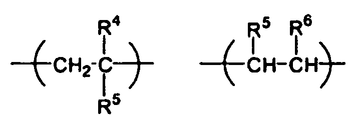 mit R⁴ = H, CH₃. R⁵ und R⁶ sind unabhängig voneinander ein Alkyl-, Aryl- oder Acylsubstituent, der mindestens eine kationisch geladene Gruppe trägt wie im Anspruch 6 definiert wird, bevorzugt eine -N⁺R⁷R⁸R⁹R¹⁰ X⁻ -Funktion.

Die Reste R⁷, R⁸, R⁹ und R¹⁰ stellen unabhängig voneinander H oder Reste dar, wie sie für R¹ beschrieben sind. Dabei gilt die Einschränkung, dass die Summe aller Kohlenstoffe der Reste R⁷, R⁸, R⁹ und R¹⁰ zusammen kleiner als 16 ist.

Die Reste R⁷, R⁸, R⁹ und R¹⁰ sind bevorzüglich im Anspruch 7 definiert.

X⁻ stammt bevorzugt aus der Gruppe folgender Anionen: C1⁻, Br⁻, NO₃⁻, SO₄²⁻ , CH₃OSO₃⁻, C₂H₅OSO₃⁻, CH₃SO₃⁻, CF₃SO₃⁻, H₂PO₄⁻, HPO²⁻ , PO₄³⁻ , HCO₃⁻, CO₃²⁻, CF₃COO⁻, HCOO⁻, CH₃COO⁻, C₂H₅C00⁻, Lactat, Tartrat, oder citrat.

Monomereinheiten B1 sind bevorzugt ausgewählt aus der Gruppe bestehend aus:

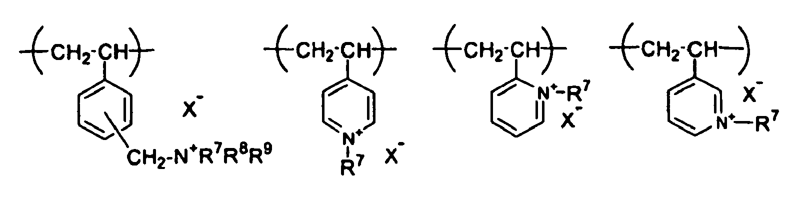

Bis zu 50 Gew.-% des Polymeren können auch bevorzugt auf kationische Einheiten B1 ausgewählt aus der Gruppe bestehend aus 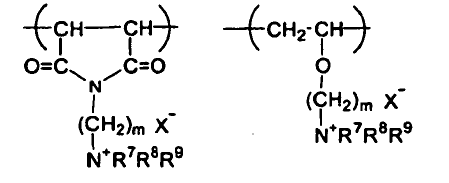 mit m=2-12, entfallen.

Besonders bevorzugt sind Monomereinheiten B1 ausgewählt aus der Gruppe bestehend aus:

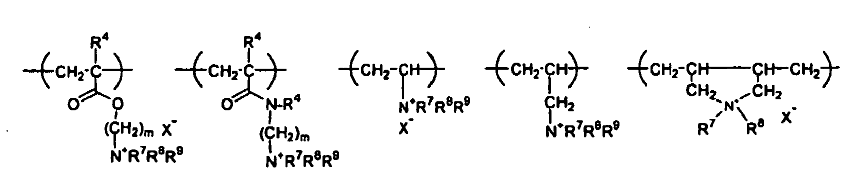

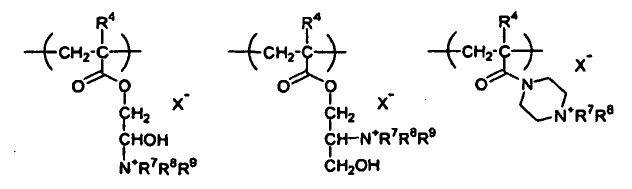

Die Monomereinheiten B1 können aus einer oder einer Kombination mehrerer der angegebenen Strukturen bestehen.

Die Monomereinheiten B6 wird wie im Anspruch 5 definiert.

Die Komponente B kann zusätzlich zu den beiden Grund-Monomereinheiten B1 und B2, die zusammen mindestens 80 Gewichtsprozent und bevorzugt 90 Gewichts % von B ausmachen, weitere Monomereinheiten B3 mit der allgemeinen Struktur 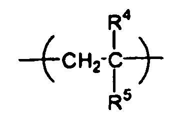 mit R⁴ = H, -CH₃ und R⁵ ein organischer Rest, insbesondere ein Alkyl-, Aryl oder Acyl-Substituent, der mindestens eine kationisch geladene Gruppe tragen kann, enthalten.

Bevorzugt sind B3-Einheiten, die eine Säurefunktion tragen oder die vernetzend wirken. Falls B3-Einheiten eine Säurefunktion tragen, gelten für sie die gleichen Auswahlregeln wie für die A1-Einheiten. Dabei ist zu beachten, dass die Anzahl der positiv geladenen Gruppen der Komponente B bei pH-Werten < 10 höher ist als die Zahl möglicher anionischer Gruppen, die gegebenenfalls durch eine dritte oder weitere Monomereinheit B3 in das Polymer eingeführt werden.

Die Molmasse des Polymeren der Komponente B ist vorzugsweise größer als 5000 und bevorzugt größer als 20000. Besonders bevorzugt sind Molmassen von 50000 bis 3000000.

Die Komponente B ist bevorzüglich aus mindestens 80 Gew.-% der Monomere B1 und B2 gebildet. Wedere Ausführungsformen der Formulierung sind durch den Ansprüchen 9-14 definiert.

In der Anstrichformulierung werden die Komponenten A und B in solchen Mengen miteinander vermischt, dass nach dem Abtrocknen des Lösemittels ein Material entsteht, das im pH-Bereich bis pH 10 in wässrigen Lösemitteln unlöslich ist, sich jedoch frühestens ab pH 10 und spätestens ab pH 12 in wässrigen Lösemitteln löst (Variante 1). Variante 1 ist bevorzugt. Alternativ ist es auch möglich die Komponenten A und B in solchen Mengen miteinander zu vermischen, dass ein Material entsteht, das im pH-Bereich ab pH 14 in wässrigen Lösemitteln unlöslich ist, sich jedoch frühestens ab pH ≤ 4 und spätestens ab pH ≤ 2 in wässrigen Lösemitteln löst (Variante 2). Die Wasserunlöslichkeit in den angegebenen pH-Bereichen kommt zustande, wenn die Gesamtzahl der positiv geladenen Gruppen und der negativ geladenen Gruppen in den Komponenten A und B annähernd gleich ist. Löslichkeit in dem pH-Fenster ab pH 10 wird erreicht, indem die Komponente B eine ausreichende Anzahl an B1-Einheiten mit R⁷ = H trägt, die ab pH ≥ 10 deprotoniert werden und somit die ausgeglichene Ladungsbilanz stören. Dieses Verhalten wird befördert, wenn die Komponente B zusätzlich B3-Einheiten trägt, die eine Struktur wie A1-Einheiten mit -COOH-Funktion aufweisen. Analog wird die Löslichkeit in dem pH-Fenster von pH ≤ 4 erreicht, indem die Komponente A eine ausreichende Anzahl an A1-Einheiten mit -COOH Funktionen trägt, die ab einem kritischen pH-Wert <4 nicht mehr deprotoniert vorliegen und somit die ausgeglichene Ladungsbilanz stören. Dieses Verhalten wird befördert, wenn die Komponente A zusätzlich A3-Einheiten trägt, die eine Struktur wie B1-Einheiten aufweisen mit R⁷ = H.

Die Formulierungen können mit den dem Fachmann bekannten Methoden auf mineralische Untergründe aufgebracht werden und verfilmen dort beim Abtrocknen. Die entstehenden Filme sind unter den üblichen Umweltbedingungen in Europa permanent und schützen den Untergrund vor Graffiti. Sie sind undurchlässig für flüssiges Wasser, aber permeabel für Wasserdampf. Die Filme lassen sich mit handelsüblichen Reinigungsmitteln für Graffiti von solchen reinigen. Durch Behandlung mit wässrigen Reinigungsmitteln mit besonders hohem (pH ≥ 10) oder niedrigem (pH ≤ 4) pH-Wert lassen sich die Filme einfach, ohne Schaden für den Untergrund und im wesentlichen rückstandsfrei wieder entfernen.

Erfindungsgemäß wird ebenso eine Oberfläche mit einer semi-permeablen Beschichtung bereitgestellt, wobei die Beschichtung aus der zuvor beschriebenen Formulierung herstellbar ist. Bevorzugte Oberflächen sind hier Innen- oder Außenfassaden, z.B. von Gebäuden. Unter Oberflächen sind aber auch figürliche oder nicht-figürliche Accessoires, die sowohl isoliert stehen oder an einer Fassade angeordnet sein können, zu verstehen.

Hierzu zählen z.B. Skulpturen, Grabsteine oder Gruften.

Die Oberfläche kann bereits einen Anstrich aufweisen, der durch die semi-permeable Beschichtung geschützt wird.

Besonders geeignet ist die Beschichtung für poröse Oberflächen, da es hier besonders wichtig ist, einen Schutz gegen mutwillige Beschädigung, z.B. durch Graffiti, zu ermöglichen, da aufgrund der Porosität die Graffiti-Farbe in die Oberfläche eindringen kann und dann nicht mehr ohne Beschädigung der Oberfläche entfernt werden kann. Besondere Bedeutung hat die Beschichtung daher beim Schutz von denkmalgeschützten oder historischen Bauten, da hier eine Beschädigung der Bautensubstanz in jedem Falle vermieden werden muss.

Von der Materialseite sind als Oberflächen solche von bekannten Natursteintypen, insbesondere Sandstein, Kalkstein, Marmor, Graphit oder Basalt, ebenso aber auch künstliche Steine, z.B. Ziegel, oder auch verputzte Fassaden umfasst.

Die erfindungsgemäße semi-permanente Beschichtung oder Schutzschicht auf Basis der wässrigen Formulierung ist so konzipiert, dass sie
- eine niedrige Oberflächenenergie besitzt,
- gut auf mineralischen Untergründen haftet,
- dauerhaft im Freien, mit hoher Beständigkeit gegenüber Umwelteinflüssen ist,
- aber mittels spezieller flüssiger Formulierungen, insbesondere mit Wasser-basierten Reinigungsverfahren, ohne Schaden für den Untergrund und im wesentlichen rückstandsfrei wieder zu entfernen ist,
- durchlässig für Wasserdampf, aber undurchlässig für kondensiertes Wasser ist,
- optisch transparent und nicht glänzend bzw. glanzlos ist.

Überraschenderweise konnte festgestellt werden, dass durch die erfindungsgemäße Beschichtung der Kapillarsog und die Kapillarpenetration von Graffiti-Farben um mindestens 50 %, insbesondere um mindestens 60 % gegenüber unbehandelten Oberflächen reduziert werden konnte. So wurde der Kapillarsog bei einer Ziegelstein-Oberfläche beispielsweise um etwa 60 % reduziert. Der Kapillarsog wurde dabei anhand der Absorption von Wasser gemäß EN 1925 bestimmt. So konnte beispielsweise hinsichtlich der Wasserdampfdurchlässigkeit der erfindungsgemäßen Beschichtung festgestellt werden, dass im Vergleich zu unbehandelten Oberflächen lediglich eine Reduzierung von 50 % der Wasserdampfdurchlässigkeit, insbesondere von weniger als 30 %, auftrat. So betrug die Reduzierung der Wasserdampfdurchlässigkeit bei einer Oberfläche aus Ziegelstein etwa 58 %. Die Bestimmung der Wasserdampfdurchlässigkeit erfolgte dabei nach EN ISO 7783-1,2. Die Trocknung wird durch die erfindungsgemäße Beschichtung überraschenderweise um weniger als 50 %, insbesondere weniger als 30 %, verzögert. Für eine Ziegelstein-Oberfläche wurde die Trocknung gegenüber einer unbehandelten Oberfläche um etwa 25 % verzögert. Die Bestimmung des Trocknungsverhaltens erfolgte hier nach RILEM 25 PEM.

Durch dieses Eigenschaftsprofil eignet sich die erfinderische semi-permanente Schutzschicht in besonderer Weise als Anti-Graffiti-Schutz für Bauwerke, speziell für solche, für deren Oberfläche poröse Materialien verwendet wurden. Ganz besonders ist damit die erfinderische, semi-permanente Schutzschicht für den Anti-Graffiti-Schutz historischer Baudenkmäler geeignet, da für diese überwiegend poröse Materialien verwendet wurden und aus Gründen des Denkmalschutzes zwar eine permanente Anwendung erwünscht ist, aufgrund der historischen Authentizität die Möglichkeit der schonenden Entfernung bei Bedarf oder im Falle kunsthistorischer Erkenntnisse aber gegeben sein soll.

### Beispiel 1

### Synthese der Latexkomponente

Entionisiertes Wasser: 392ml = (312 + 40 + 20 + 20)ml
Na-dodecylsulfat: 0.5g = (0.3g + 2mal 0.1g in je 10 ml ention. Wasser)
Borax: 0.274g
K-peroxodisulfat: 0.216g in 40ml ention. Wasser
Methacrylsäure: 6.0g in 20ml ention. Wasser (Spritze auf Spritzenpumpe)
Monomermischung 1: 2g EPMA, 19g BuA, 19g BuMA
Monomermischung 2: 6g EPMA, 12g BuA, 12g BuMA
EPMA - 2,3-Epoxypropylmethacylat, BuA - n-Butylacrylat, BuMA - n-Butylmethacrylat

In einem Becherglas werden in 312ml entionisiertem Wasser der Emulgator Natriumdodecylsulfat (SDS) und das pH-Puffersalz Borax unter Rühren bei Raumtemperatur gelöst. Zusammen mit Monomermischung 1 wird das Ganze wird in einen 500m1-Doppelmantel-Glasreaktor mit Ankerrührer, Rückflusskühler, Gaseinleitungsrohr und Bodenablassventil eingefüllt und (mindestens) 20mins unter Rührung bei 350/min mit Reinststickstoff gespült. Dabei wird per Thermostat auf 60°C aufgeheizt. Nach (mindestens) 10mins auf Polymerisationstemperatur wird der Ansatz durch (rasche) Zugabe von 0.216g Kaliumperoxodisulfat (KPS), gelöst in 40ml entionisiertem Wasser, gestartet. Zum selben Zeitpunkt wird die Spritzenpumpe in Betrieb gesetzt, die im Zeitraum von 2.2h 6g Methacrylsäure (MAA), in 20ml entionisiertem Wasser verteilt, in den Reaktor fördert. Nach 2h Polymerisationsdauer erfolgt aus einem Tropftrichter über einen Zeitraum von 45mins der langsame Zulauf von Monomermischung 2. Direkt im Anschluss daran werden 0.1 g SDS, gelöst in 10ml entionisiertem Wasser, zugegeben. Diese SDS-Zugabe wird nach 7h Polymerisationsdauer wiederholt. Nach 8h Reaktion wird noch einmal per Tropftrichter über 20mins die Monomermischung 1 zudosiert. Man lässt über Nacht auspolymerisieren, d.h. die Polymerisationsdauer bei 60°C beträgt mindestens 16h. Anschließend wird durch Abkühlen und Luftzutritt abgebrochen.

Das Resultat ist ein Latex mit einem Feststoffgehalt von 23%, einer Partikelgröße von 190nm (+/- 5%) und einer Polydispersität <0.1.

Zur Aufarbeitung wird dieser Latex - in (ca.) 100ml-Volumina aufgeteilt - in 30mm-Dialyseschläuche mit einer Ausschlussgrenze von 14.000 D gegeben und zwecks Ammonolyse (unter dem Abzug) in gedeckelten Bechergläsern mit Ammoniakwasser in einer Konzentration zwischen 5% und 10% für mindestens 72h in Kontakt gebracht. Dabei beträgt das Volumenverhältnis zwischen Latex und Ammoniakwasser mindestens 1:2. Anschließend wird jeder 100m1-Dialyseschlauch mindestens 5 Tage in einem Becher oder Becherglas von 2L bis 5L bei täglichem Wasserwechsel gegen entionisiertes Wasser dialysiert.

### Beispiel 2

### Synthese der Co-Komponente

(DMAEMA : MATSP 1:1 0.2mol / 0.2mol)
31.4g DMAEMA (Dimethylaminoethylmethacrylat) werden mit konz. Salzsäure auf pH 5-7 eingestellt. 49.8g MATSP (Methacrylsäure-[3-(Trimethoxysilyl-)]-propylester) werden hinzugefügt, bevor der Ansatz mit entionisiertem Wasser auf 360g aufgefüllt wird.

Das Ganze wird in einen 500ml-Doppelmantel-Glasreaktor mit Ankerrührer, Rückflusskühler, Gaseinleitungsrohr und Bodenäblassventil eingefüllt und (mindestens) 20min unter Rührung mit Reinststickstoff gespült. Dabei wird per Thermostat auf 80°C aufgeheizt. Nach (mindestens) 10min auf Polymerisationstemperatur wird der Ansatz durch (rasche) Zugabe von 4.04g V-50-Azoinitiator (Azo-bis-isobutyramidiniumchlorid von Wako Chemical), gelöst in 40ml entionisiertem Wasser, gestartet. Nach (mindestens) 90min bei 80°C und einer Rührerdrehzahl von 400/min wird die Polymerisation durch Abkühlen und Luft-Zutritt beendet.

Das Resultat ist eine milchig-weiße Polymerdispersion mit einem Feststoffgehalt von 20%.

### Anstrichformulierungen

Alle flüssigen Formulierungen für die Beschichtungen wurden aus unterschiedlichen Amphoter-Latices und Polykationen angesetzt, wie sie in den Beispielen 1 und 2 beschrieben worden sind. Dann wurden Additive hinzugefügt, die für Dispersionsanstriche auf Wasserbasis typisch sind. Als solche Zusätze kann man aber auch viele andere Produkte einsetzen, die es auf dem Markt für Farben-Additive gibt, z.B.:

### Entschäumer:

EFKA^{®} 2556, EFKA^{®} 2557, EFKA^{®} 2550 **Ciba**
Byk^{®} 019, Byk^{®} 020, Byk^{®} 022, Byk^{®} 024 **Byk Chemie**
Agitan^{®} 232, Agitan^{®} 295 - Kohlenwasserstoff
Agitan^{®} E255 - Polysiloxan **Munzig**

### Oberflächenaktive Additive:

EFKA^{®} 3030, EFKA^{®} 3035, EFKA^{®} 3552 - Polysiloxane EFKA^{®} 2500, EFKA^{®} 3570, EFKA^{®} 3772 - Fluorkohlenwasserstoff
Byk^{®} 307, Byk^{®} 333 - Polydimethylsiloxan
Byk^{®} 380N - Polyacryl-Copolymere

### UV-Absorber

DAPRO^{®} UV CW30 - **Elementis**

### Biozide:

Für den Schutz von Formulierungen und Beschichtungen: Troysan^{®} AF-3, Troysan^{®} EC-18 - **Troy Corp.**

### Neutralisierungsagenzien:

Ammoniak
N,N-Diethylethanolamin

### Beispiel 3

Zusammensetzung:

| **Nr.** | **Komponente** | **Gehalt [g]** |
|---|---|---|
| 1 | Amphoter-Latex nach Bsp. 1 | 30 |
| 2 | Dimethylethanolamin | 1,8 |
| 3 | Polykation nach Bsp. 2 | 4,5 |
| 4 | Dehydran^{®} 1293 | 0,18 |
| 5 | Byk^{®} 348 | 0,15 |
| 6 | Rocima^{®} 344 | 0,15 |
| 7 | Tinuvin^{®} 5051 | 0,6 |
| 8 | TegoPhobe^{®} 6600 | 1,5 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-8). Die Mischung wird nun für weitere, 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 9,4 % |
| PH | 9,8 |
| Viskosität (DIN Gef. ∅=4 mm) | 10 -12 s 10 -12 s |
| Dichte | 1,02 kg/dm³ |
| Anzahl der Anstriche (Aufträge) | min. 3 (abh. Von der Porosität des Steins) |
| Trocknung (Raumtemperatur) | Erster Anstrich |
| 20°C, 65% rel. Feuchte | → min. 60 min |
| | Weitere Aufträge |
| | → min. 30 min |
| Beschichtungseigenschaften | Glatt, leicht milchig, semi-matt |
| Härte nach König, [s] | 45 |
| Dicke 20 - 30 µm auf dem Glas | |

### Beispiel 4

Zusammensetzung

| **Nr.** | **Komponente** | **Gehalt [g]** |
|---|---|---|
| 1 | Amphoter-Latex nach Bsp. 1 | 30 |
| 2 | Wasser | 30 |
| 3 | Dimethylethanolamin | 0,9 |
| 4 | Polykation nach Bsp. 2 | 2,16 |
| 5 | Dehydran^{®} 1293 | 0,08 |
| 6 | Byk^{®} 348 | 0,15 |
| 7 | Rocima^{®} 344 | 0,15 |
| 8 | Tinuvin^{®} 5051 | 0,6 |
| 9 | TegoPhobe^{®} 6600 | 1,0 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-9). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchighomogene Flüssigkeit mit leichtem Amin-Geruch |
| Trockenfeststoffgehalt: | 7,9 % |
| pH | 9,93 |
| Viskosität (DIN Gef. ∅=4 mm) | 10 -12 s |
| Dichte | 1,01 kg/dm³ |
| Anzahl der Anstriche (Aufträge) | min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, leicht milchig, semi-matt |
| Härte nach König, [s] | 15 |
| Dicke 20 - 30 µm auf dem Glas | |

### Beispiel 5

Zusammensetzung

| **Nr.** | **Komponente** | **Gehalt [g]** |
|---|---|---|
| 1 | Amphoter-Latex nach Bsp. 1 | 30 |
| 2 | Dimethylethanolamin | 0,3 |
| 3 | Polykation nach Bsp. 2 | 1,6 |
| 4 | Dehydran 1293 | 0,1 |
| 5 | Byk^{®} 348 | 0,08 |
| 6 | Rocima^{®} 344 | 0,1 |
| 7 | Tinuvin^{®} 5051 | 0,4 |
| 8 | Byk^{®} 348 | 0,1 |
| 9 | TegoPhobe^{®} 6600 | 0,1 |
| 10 | Butyldiglykol | 0,4 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-10). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchighomogene Flüssigkeit mit leichtem Amin-Geruch |
| Trockenfeststoffgehalt: | 8,3 % |
| pH | 8,8 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, leicht milchig, semi-matt |
| Härte nach König, [s] | 26 |
| Dicke 20 - 30 µm auf dem Glas | |

### Beispiel 6

Zusammensetzung

| **Nr.** | **Komponente** | **Gehalt [g]** |
|---|---|---|
| 1 | Amphoter-Latex nach Bsp. 1 | 90 |
| 2 | Dimethylethanolamin | 1,8 |
| 3 | Polykation nach Bsp. 2 | 4,5 |
| 4 | Dehydran^{®} 1293 | 0,18 |
| 5 | Byk^{®} 348 | 0,08 |
| 6 | Rocima^{®} 344 | 0,5 |
| 7 | Tinuvin^{®} 5051 | 0,9 |
| 8 | Byk^{®} 348 | 0,3 |
| 9 | TegoPhobe^{®} 6600 | 3,6 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-9). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 9,5 % |
| pH | 9,85 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, leicht milchig, semi-matt |
| Härte nach König, [s] | 20 |
| Dicke 20 - 30 µm auf dem Glas | |

### Beispiel 7

Zusammensetzung:

| **Nr.** | **Komponente** | **Gehalt [g]** |
|---|---|---|
| 1 | Amphoter-Latex nach Bsp. 1 | 30 |
| 2 | Dimethylethanolamin | 0,6 |
| 3 | Polykation nach Bsp. 2 | 1,5 |
| 4 | Dehydran^{®} 1293 | 0,06 |
| 5 | Rocima^{®} 344 | 0,1 |
| 6 | Aquacer^{®} 539 | 0,4 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-6). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 8,0 % |
| pH | 9,32 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, leicht milchig, semi-matt |
| Härte nach König, [s] | 37 |
| Dicke 20 - 30 µm auf dem Glas | |

### Beispiel 8

Zusammensetzung:

| **Nr.** | **Komponente** | **Gehalt [g]** |
|---|---|---|
| 1 | Amphoter-Latex nach Bsp. 1 | 40 |
| 2 | Dimethylethanolamin | 1 |
| 3 | Polykation nach Bsp. 2 | 2,6 |
| 4 | Dehydran^{®} 1293 | 0,1 |
| 5 | TegoPhobe^{®} 6600 | 0,2 |

Unter Rühren wird dem Amphoter-Latex (1) das Amin (2) zugefügt. Nach dem Durchmischen wird das Polykation (3) langsam zugegeben. Nach Beendigung der Zugabe des Polykations werden die übrigen Komponenten eine nach der anderen hinzugefügt (4-5). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 14,3 % |
| pH | 9,2 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, leicht milchig, semi-matt |
| Härte nach König, [s] | 21 |
| Dicke 20 - 30 µm auf dem Glas | |

### Beispiel 9

Zusammensetzung:

| **Nr.** | **Komponente** | **Gehalt [g]** |
|---|---|---|
| 1 | Amphoter-Latex nach Bsp. 1 | 10 |
| 2 | Amphoter-Latex nach Bsp. 1 | 10 |
| 3 | Amphoter-Latex nach Bsp. 1 | 10 |
| 4 | Wasser | 30 |
| 5 | Dimethylethanolamin | 0,9 |
| 6 | Polykation nach Bsp. 2 | 2,01 |
| 7 | Dehydran^{®} 1293 | 0,08 |
| 8 | Byk^{®} 348 | 0,15 |
| 9 | Rocima^{®} 344 | 0,15 |
| 10 | Tinuvin^{®} 5051 | 0,9 |
| 11 | TegoPhobe^{®} 6600 | 1,0 |

Unter Rühren werden der Mischung aus Amphoter-Latices (1-3) entionisiertes Wasser (4) und das Amin (5) zugefügt. Nach dem Durchmischen wird das Polykation (6) langsam zugegeben. Nach Beendigung der Zugabe des Polykations werden die übrigen Komponenten eine nach der anderen hinzugefügt (7-11). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchighomogene Flüssigkeit mit leichtem Amin-Geruch |
| Trockenfeststoffgehalt: | 8,9 % |
| pH | 9,85 |
| Viskosität (DIN Gef. ∅=4 mm) | 10 -12 s |
| Dichte | 1,01 kg/dm³ |
| Anzahl der Anstriche (Aufträge) | Min. 2 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, transparent, semi-matt |
| Härte nach König, [s] | 20 |
| Dicke 20 - 30 µm auf dem Glas | |

### Beispiel 10

Zusammensetzung:

| **Nr.** | **Komponente** | **Gehalt [g]** |
|---|---|---|
| 1 | Amphoter-Latex nach Bsp. 1 | 10 |
| 2 | Wasser | 20 |
| 3 | Dimethylethanolamin | 1,2 |
| 4 | Polykation nach Bsp. 2 | 1,62 |
| 5 | Dehydran^{®} 1293 | 0,04 |
| 6 | Byk^{®} 348 | 0,07 |
| 7 | Rocima^{®} 344 | 0,07 |
| 8 | Tinuvin^{®} 5051 | 0,9 |
| 9 | TegoPhobe^{®} 6600 | 0,33 |

Unter Rühren werden dem Amphoter-Latex (1) entionisiertes Wasser (2) und das Amin (3) zugefügt. Nach dem Durchmischen wird das Polykation (4) langsam zugegeben. Nach Beendigung der Zugabe des Polykations werden die übrigen Komponenten eine nach der anderen hinzugefügt (5-9). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 7,1 % |
| pH | 9,56 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, milchig, semi-matt |
| Härte nach König, [s] | 18 |
| Dicke 20 - 30 µm auf dem Glas | |

### Beispiel 11

Zusammensetzung:

| **Nr.** | **Komponente** | **Gehalt [g]** |
|---|---|---|
| 1 | Amphoter-Latex nach Bsp. 1 | 10 |
| 2 | Wasser | 20 |
| 3 | Dimethylethanolamin | 1,2 |
| 4 | Polykation nach Bsp. 2 | 1,57 |
| 5 | Dehydran^{®} 1293 | 0,04 |
| 6 | Byk^{®} 348 | 0,07 |
| 7 | Rocima^{®} 344 | 0,07 |
| 8 | Tinuvin^{®} 5051 | 0,9 |
| 9 | TegoPhobe^{®} 6600 | 0,33 |

Unter Rühren werden dem Amphoter-Latex (1) entionisiertes Wasser (2) und das Amin (3) zugefügt. Nach dem Durchmischen wird das Polykation (4) langsam zugegeben. Nach Beendigung der Zugabe des Polykations werden die übrigen Komponenten eine nach der anderen hinzugefügt (5-9). Die Mischung wird nun für weitere 15-30 Minuten gerührt und anschließend 24 Stunden ohne Rühren gelagert. Die Eigenschaften der flüssigen Formulierung sollten erst nach mindestens 24 Stunden ermittelt werden.

Die Eigenschaften der Beschichtung sollten 24 Stunden nach der Auftragung bestimmt werden.

### Basiseigenschaften der flüssigen Formulierung:

| | |
|---|---|
| Erscheinungsbild der flüssigen Mischung | Niedrigviskose, milchig-homogene Flüssigkeit mit leichtem Amin-Geruch |
| Trockenfeststoffgehalt: | 7,4 % |
| pH | 9,42 |
| Viskosität (DIN Gef. ∅=4 mm) | 10 -12 s |
| Dichte | 1,01 kg/dm³ |
| Anzahl der Anstriche (Aufträge) | Min. 3 (abh. Von der Porosität des Steins) |
| Trocknung (Raumtemperatur) | Erster Anstrich |
| 20°C, 65% rel. Feuchte | → min. 60 min Weitere Aufträge |
| | → min. 30 min |
| Beschichtungseigenschaften | Glatt, milchig, semi-matt |
| Härte nach König, [s] | 20 |
| Dicke 20 - 30 µm auf dem Glas | |

## Patentansprüche

1. Formulierung zum semi-permanenten Schutz von Oberflächen enthaltend eine makromolekulare Komponente A mit negativer Nettoladung und eine makromolekulare Komponente B mit positiver Nettoladung in mindestens einem Lösungsmittel, wobei zumindest eine Komponente in Form von Latexpartikeln vorliegt und mindestens eine der Komponenten einen Rest ausgewählt aus der Gruppe bestehend aus C₄-C₃₀-Alkylgruppen, zumindest teilweise fluorierte C₄-C₁₈-Alkylgruppen, Silikongruppen und Mischungen hiervon aufweist, und wobei die Nettoladung mindestens einer Komponente pH-abhängig ist, so dass in einem Teilbereich der pH-Skala die Komponenten A und B in Ladungswechselwirkung stehen und in dem sich vom Teilbereich unterscheidenden Bereich der pH-Skala die Ladungswechselwirkung zwischen den Komponenten A und B aufgehoben ist.

2. Formulierung nach Anspruch 1,
**dadurch gekennzeichnet, dass** die Komponente A aus Monomeren A1 ausgewählt aus der Gruppe bestehend aus 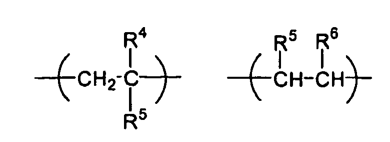 mit R⁴ = H oder CH₃, R⁵ = Alkyl-, Aryl- oder
Acylrest, der mindestens eine Säurefunktion oder ein Salz hiervon trägt, R⁶ = R⁴ oder R⁵,
und aus Monomeren A2 ausgewählt aus der Gruppe bestehend aus 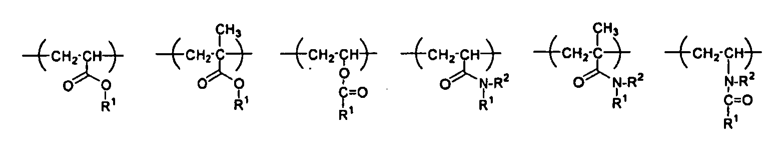 mit
R¹ = C₁-C₂₀-Alkyl, C₁-C₂₀-Alkylaryl, die durch Fluoroalkyl, Silan-, Siloxan-, Ester-, Amid- Urethan-, Ether-, Thioether-, Disulfid- Epoxy- oder ungesättigte Gruppen substituiert sein kann, R² = H, C₁-C₂₀-Alkyl, C₁-C₂₀-Alkylaryl, die durch Fluoroalkyl, Silan-, Siloxan-, Ester-, Amid- Urethan-, Ether-, Thioether-, Disulfid- Epoxy- oder ungesättigte Gruppen substituiert sein kann, und gegebenenfalls aus Monomeren A3 ausgewählt aus der Gruppe bestehend aus 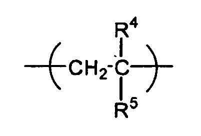 mit
R⁴ = H oder CH₃, R⁵ = organischer Rest besteht.

3. Formulierung nach Anspruch 1 oder 2,
**dadurch gekennzeichnet, dass** das Monomer A1 ausgewählt ist aus der Gruppe bestehend aus 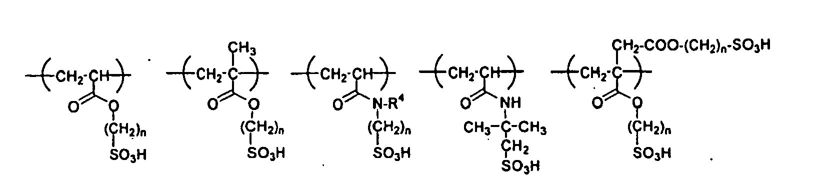 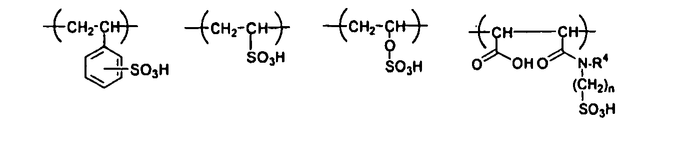 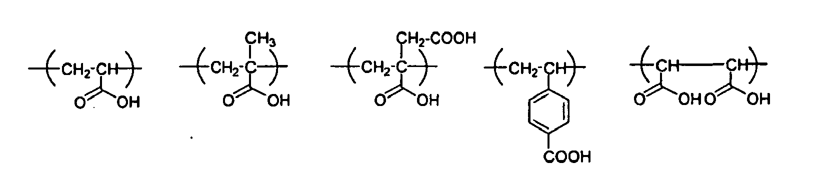 mit n = 2 oder 3 und R⁴ = H oder CH₃.

4. Formulierung nach einem der vorhergehenden Ansprüche,
**dadurch gekennzeichnet, dass** die Komponente A aus mindestens 80 Gew.-% der Monomere A1 und A2 gebildet ist.

5. Formulierung nach einem der vorhergehenden Ansprüche,
**dadurch gekennzeichnet, dass** die Komponente B aus Monomeren B1 ausgewählt aus der Gruppe bestehend aus 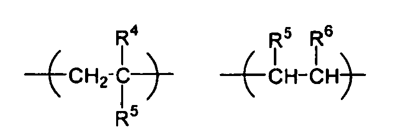 mit R⁴ = H oder CH₃, R⁵ = Alkyl-, Aryl- oder Acylrest, der mindestens eine kationisch geladene Gruppe trägt, R⁶ = R⁴ oder R⁵,
und aus Monomeren B2 ausgewählt aus der Gruppe bestehend aus 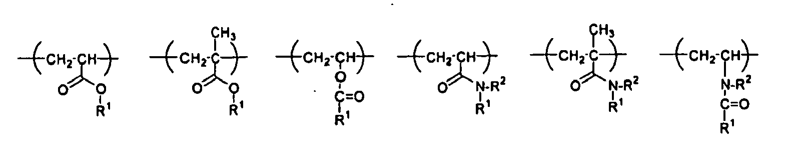 mit
R¹ = C₁-C₂₀-Alkyl, C₁-C₂₀-Alkylaryl, die durch Fluoroalkyl, Silan-, Siloxan-, Ester-, Amid-, Urethan-, Ether-, Thioether-, Disulfid- Epoxy- oder ungesättigte Gruppen substituiert sein kann,
R² = H, C₁-C₂₀-Alkyl, C₁-C₂₀-Alkylaryl, die durch Fluoroalkyl, Silan-, Siloxan-, Ester-, Amid- Urethan-, Ether-, Thioether-, Disulfid- Epoxy- oder ungesättigte Gruppen substituiert sein kann,
und gegebenenfalls aus Monomeren A3 ausgewählt aus der Gruppe bestehend aus 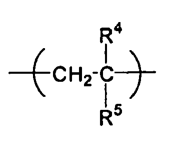 mit
R₄ = H oder CH₃, R₅ = organischer Rest besteht.

6. Formulierung nach dem vorhergehenden Anspruch, **dadurch gekennzeichnet, dass** das Monomer B1 als kationisch geladene Gruppe folgende Gruppe trägt:
-N⁺R⁷R⁸R⁹ X⁻
wobei die Reste R⁷, R⁸, R⁹ unabhängig voneinander ausgewählt sind aus der Gruppe bestehend aus H, C₁-C₂₀-Alkyl, C₁-C₂₀-Alkylaryl, die durch Fluoroalkyl, Silan-, Siloxan-, Ester-, Amid-, Urethan-, Ether-, Thioether-, Disulfid- Epoxy- oder ungesättigte Gruppen substituiert sein kann, und X⁻ ausgewählt ist aus der Gruppe bestehend aus Cl⁻, Br⁻, NO₃⁻ , SO₄²⁻, CH₃OSO₃⁻, C₂H₅OSO₃⁻, CH₃SO₃⁻, H₂PO4⁻, HPO₄²⁻_{,} PO₄³⁻, CO₃²⁻, CF₃COO⁻, HCOO⁻, CH₃COO⁻, C₂H₅COO⁻, Lactat, Tatrat und Citrat.

7. Formulierung nach dem vorhergehenden Anspruch, **dadurch gekennzeichnet, dass** das Monomer B1 ausgewählt ist aus der Gruppe bestehend aus 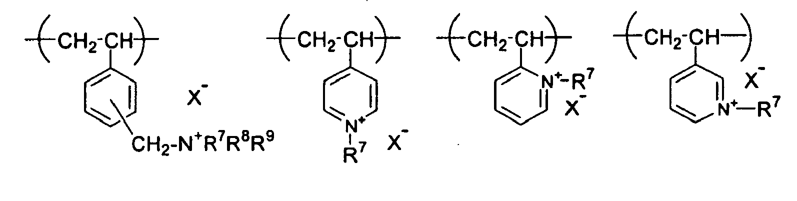 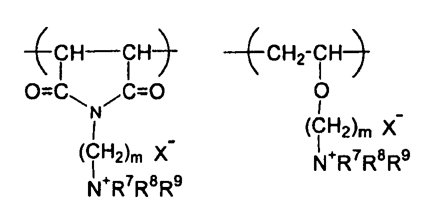 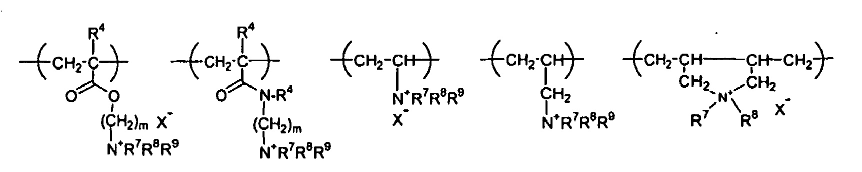 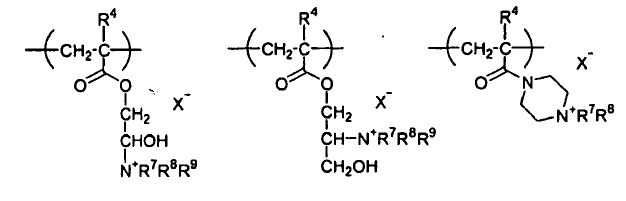 wobei die Reste R⁷, R⁸, R⁹, R¹⁰ unabhängig voneinander ausgewählt sind aus der Gruppe bestehend aus C₁-C₂₀-Alkyl, C₁-C₂₀-Alkylaryl, die durch Fluoroalkyl, Silan-, Siloxan-, Ester-, Amid-, Urethan-, Ether-, Thioether-, Disulfid- Epoxy- oder ungesättigte Gruppen substituiert sein kann, und
X⁻ ausgewählt ist aus der Gruppe bestehend aus Cl⁻, Br⁻, NO₃⁻, SO₄²⁻ , CH₃OSO₃⁻, C₂H₅OSO₃⁻, CH₃SO₃⁻, H₂PO₄⁻, HPO₄²⁻, PO₄³⁻ , CO₃²⁻, CF₃COO⁻, HCOO⁻, CH₃COO⁻, C₂H₅COO⁻, Lactat, Tatrat und Citrat sowie m =2 bis 12.

8. Formulierung nach einem der vorhergehenden Ansprüche,
**dadurch gekennzeichnet, dass** die Komponente B aus mindestens 80 Gew.-% der Monomere B1 und B2 gebildet ist.

9. Formulierung nach einem der vorhergehenden Ansprüche,
**dadurch gekennzeichnet, dass** die Komponenten A und B unabhängig voneinander eine Molmasse von mindestens 5000 g/mol besitzen.

10. Formulierung nach einem der vorhergehenden Ansprüche,
**dadurch gekennzeichnet, dass** die Ladungswechselwirkung zwischen Komponente A und B bei einem pH ≥10 oder bei einem pH ≤ 4 aufgehoben wird.

11. Formulierung nach einem der vorhergehenden Ansprüche,
**dadurch gekennzeichnet, dass** der Polymergehalt mindestens 5 bis 60 Gew.-% beträgt.

12. Formulierung nach einem der vorhergehenden Ansprüche,
**dadurch gekennzeichnet, dass** das Lösungsmittel Wasser ist.

13. Formulierung nach einem der vorhergehenden Ansprüche,
**dadurch gekennzeichnet, dass** die Formulierung weitere Zusatzstoffe enthält.

14. Formulierung nach dem vorhergehenden Anspruch, **dadurch gekennzeichnet, dass** die Zusatzstoffe ausgewählt sind aus der Gruppe bestehend aus pH-Reglern, Tensiden, Entschäumern, Bioziden, UV-Absorbern, Hydrophobierungszusätzen und deren Mischungen.

15. Oberfläche von Innen- oder Außenfassaden oder figürlichen und nicht-figürlichen Accessoires, mit einer semi-permeablen Beschichtung herstellbar aus einer Formulierung nach einem der vorhergehenden Ansprüche.

16. Verwendung der Formulierung nach einem der Ansprüche 1 bis 14 zum Schützen von Oberflächen im Innen- und Außenbereich gegen mutwillige Verschmutzungen oder die Einwirkung von Luftverschmutzungen.

17. Verwendung der Formulierung nach dem vorhergehenden Anspruch als Anti-Graffiti-Beschichtung.

## Claims

1. A formulation for the semi-permanent protection of surfaces, said formulation including a macromolecular component A with a negative net charge and a macromolecular component B with a positive net charge in at least one solvent, in which formulation at least one component is present in the form of latex particles and at least one of the components has a group selected from the group consisting of C₄-C₃₀ alkyl groups, at least partly fluorinated C₄-C₁₈ alkyl groups, silicone groups and mixtures thereof,
and in which formulation the net charge of at least one component is pH-dependent such that, in one section of the pH scale, the components A and B are in charge interaction and, in the pH scale range differing from the section, the charge interaction between the components A and B is eliminated.

2. A formulation according to claim 1,
**characterised in that** the component A consists of monomer A1 selected from the group consisting of 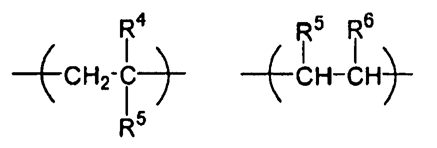 wherein R⁴ = H or CH₃, R⁵ = alkyl, aryl or acyl group having at least one acid functional group or a salt thereof, R⁶ = R⁴ or R⁵,
and of monomer A2 selected from the group consisting of 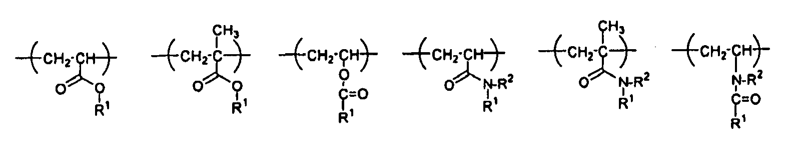 wherein
R¹ = C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups,
R²= H, C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups,
and optionally of monomer A3 selected from the group consisting of 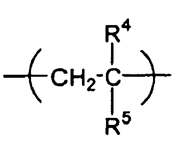 wherein
R⁴ = H or CH₃, R⁵ = organic group.

3. A formulation according to claim 1 or 2,
**characterised in that** the monomer A 1 is selected from the group consisting of 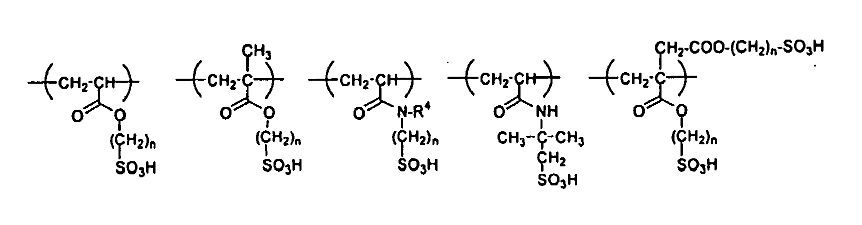 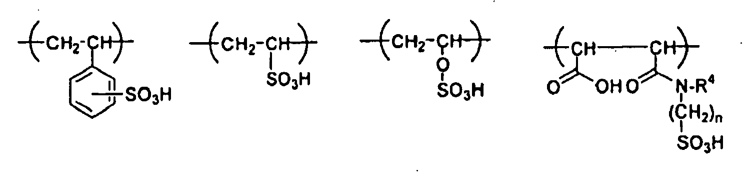 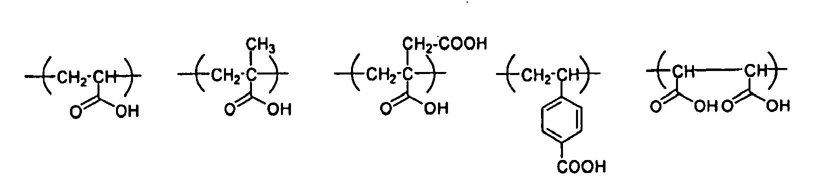 wherein n = 2 or 3 and R⁴ = H or CH₃.

4. A formulation according to any one of the preceding claims, **characterised in that** the component A is formed from at least 80 wt.% of the monomers A 1 and A2.

5. A formulation according to any one of the preceding claims, **characterised in that** the component B consists of monomer B 1 selected from the group consisting of 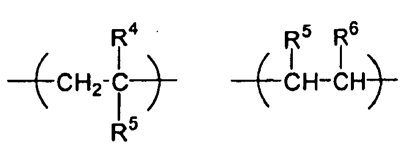 wherein R⁴ = H or CH₃, R⁵ = alkyl, aryl or acyl group having at least one cationically charged group, R⁶ = R⁴ or R⁵,
and of monomer B2 selected from the group consisting of 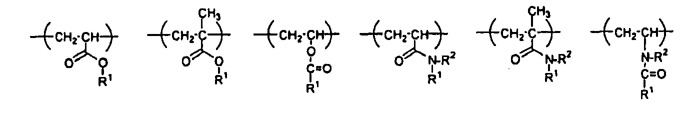 wherein
R¹ = C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups,
R² = H, C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups,
and optionally of monomer A3 selected from the group consisting of 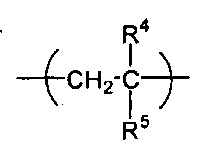 wherein
R⁴ = H or CH₃, R⁵ = organic group.

6. A formulation according to the preceding claim,
**characterised in that** the monomer B1 has the following group as the cationically charged group:
-N⁺R⁷R⁸R⁹ X⁻
wherein the groups R⁷, R⁸, R⁹ are, independently of each other, selected from the group consisting of H, C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups, and X⁻ is selected from the group consisting of Cl⁻, Br⁻, NO₃⁻, SO₄²⁻, CH₃OSO₃⁻, C₂H₅OSO₃⁻, CH₃SO₃⁻, H₂PO₄⁻, HPO₄²⁻, PO₄³⁻ , Co₃²⁻ , CF₃COO⁻, HCOO⁻, CH₃COO⁻, C₂H₅COO⁻, lactate, tartrate and citrate.

7. A formulation according to the preceding claim,
**characterised in that** the monomer B1 is selected from the group consisting of 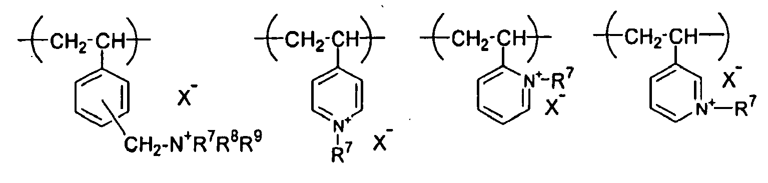 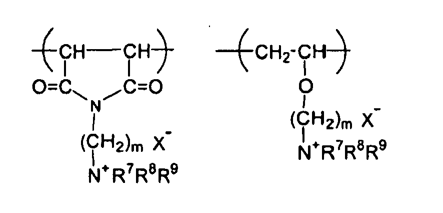 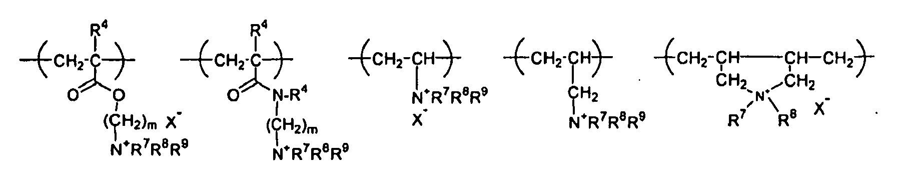 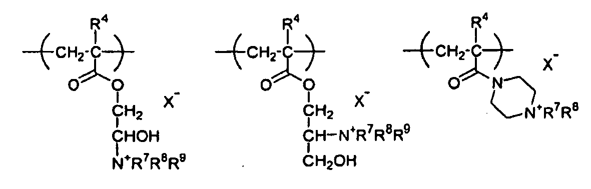 wherein the groups R⁷, R⁸, R⁹, R¹⁰ are, independently of each other, selected from the group consisting of C₁-C₂₀ alkyl, C₁-C₂₀ alkyl aryl, which can be substituted by fluoroalkyl, silane, siloxane, ester, amide, urethane, ether, thioether, disulphide, epoxy or unsaturated groups, and
X⁻ is selected from the group consisting of Cl⁻, Br⁻, NO₃⁻, SO₄²⁻, CH₃OSO₃⁻, C₂H₅OSO₃⁻, CH₃SO₃⁻, H₂PO₄⁻, HPO₄²⁻, PO₄³⁻ , CO₃²⁻, CF₃COO⁻, HCOO⁻, CH₃COO⁻, C₂H₅COO⁻, lactate, tartrate and citrate, and m = 2 to 12.

8. A formulation according to any one of the preceding claims,
**characterised in that** the component B is formed from at least 80 wt.% of the monomers B1 and B2.

9. A formulation according to any one of the preceding claims,
**characterised in that** the components A and B have, independently of each other, a molar mass of at least 5000 g/mol.

10. A formulation according to any one of the preceding claims,
**characterised in that** the charge interaction between component A and B is eliminated at a pH ≥10 or at a pH ≤ 4.

11. A formulation according to any one of the preceding claims,
**characterised in that** the polymer content is at least 5 to 60 wt.%.

12. A formulation according to any one of the preceding claims,
**characterised in that** the solvent is water.

13. A formulation according to any one of the preceding claims,
**characterised in that** the formulation includes further additives.

14. A formulation according to the preceding claim,
**characterised in that** the additives are selected from the group consisting of pH regulators, surfactants, defoaming agents, biocides, UV absorbers, water repelling admixtures and mixtures thereof.

15. A surface of internal or external facades or of statuary and non-statuary accessories, said surface having a semipermeable coating that can be produced from a formulation according to any one of the preceding claims.

16. Use of the formulation according to any one of claims 1 to 14 for protecting indoor and outdoor surfaces against wanton defacement or against exposure to air pollution.

17. Use of the formulation according to the preceding claim as an anti-graffiti coating.

## Revendications

1. Formulation de protection semi permanente de surfaces contenant un composant macromoléculaire A avec une charge nette négative et un composant macromoléculaire B avec une charge nette positive dans au moins un solvant où au moins un composant est présent sous la forme de particules de latex et au moins un des composants comprend un résidu choisi parmi le groupe consistant en groupes C₄-C₃₀ alkyle, groupes C₄-C₁₈ alkyle au moins en partie fluorés, groupes silicone et des mélanges de ces derniers, et où la charge nette d'au moins un composant est dépendante du pH, de sorte que dans un sous domaine de l'échelle de pH les composants A et B sont en interaction de charge et dans le domaine de l'échelle de pH se différenciant du sous-domaine, l'interaction de charge entre les composants A et B s'annule.

2. Formulation selon la revendication 1, **caractérisée en ce que** le composant A est composé de monomères A1 choisis parmi le groupe consistant en 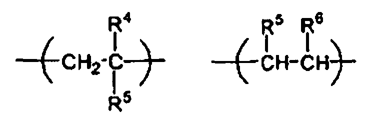 avec R⁴ = H ou CH₃, R⁵ = résidu alkyle, aryle ou acyle qui porte au moins une fonction acide ou un sel de celle-ci, R⁶ = R⁴ ou R⁵,
et de monomères A2 choisis parmi le groupe consistant en 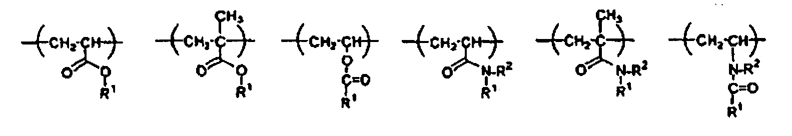 R¹ = C₁-C₂₀-alkyle, C₁-C₂₀-alkylaryle, qui peut être substitué par des groupes fluoroalkyle, silane, siloxane, ester, amide, uréthane, éther, thioéther, disulfure, époxy, ou des groupes insaturés,
R² = H, C₁-C₂₀-alkyle, C₁-C₂₀-alkylaryle, qui peut être substitué par des groupes fluoroalkyle, silane, siloxane, ester, amide, uréthane, éther, thioéther, disulfure, époxy ou des groupes insaturés,
et éventuellement de monomères A3 choisis parmi le groupe consistant en 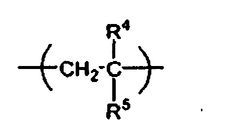 avec
R⁴ = H ou CH₃, R⁵ = résidu organique.

3. Formulation selon la revendication 1 ou 2, **caractérisée en ce que** le monomère A1 est choisi parmi le groupe consistant en 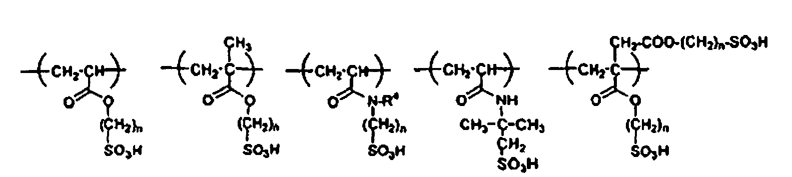 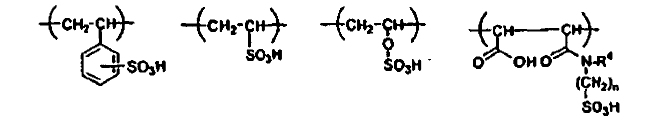 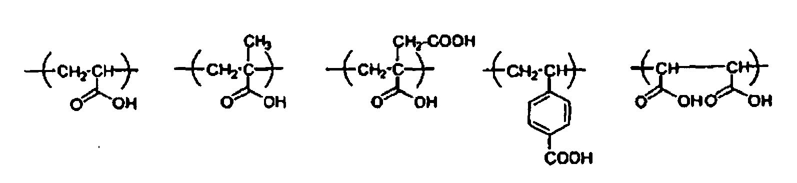 avec n = 2 ou 3 et R⁴ = H ou CH₃.

4. Formulation selon l'une quelconque des revendications précédentes, **caractérisée en ce que** le composant A est constitué d'au moins 80 % en poids de monomères A1 et A2.

5. Formulation selon l'une quelconque des revendications précédentes, **caractérisée en ce que** le composant B est constitué de monomères B1 choisis parmi le groupe consistant en 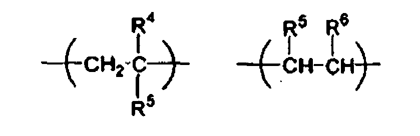 avec R⁴ = H ou CH₃, R⁵ = résidu alkyle, aryle ou acyle, qui porte au moins un groupe de charge cationique, R⁶ = R⁴ ou R⁵,
et de monomères B2 choisis parmi le groupe consistant en 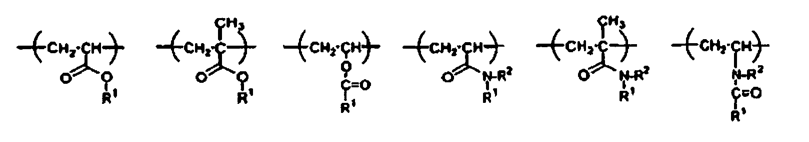 avec
R¹ = C₁-C₂₀-alkyle, C₁-C₂₀-alkylaryle, qui peut être substitué par des groupes fluoroalkyle, silane, siloxane, ester, amide, uréthane, éther, thioéther, disulfure,
époxy ou des groupes insaturés,
R² = H, C₁-C₂₀-alkyle, C₁-C₂₀-alkylaryle, qui peut être substitué par des groupes fluoroalkyle, silane, siloxane, ester, amide, uréthane, éther, thioéther, disulfure,
époxy ou des groupes insaturés,
et éventuellement de monomères A3 choisis parmi le groupe consistant en 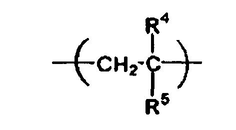 avec
R₄ = H ou CH₃, R₅ = résidu organique.

6. Formulation selon la revendication précédente, **caractérisée en ce que** le monomère B 1 porte comme groupe de charge cationique le groupe suivant :
-N⁺R⁷R⁸R⁹ X⁻
où les résidus R⁷, R⁸, R⁹ sont choisis indépendamment les uns des autres parmi le groupe consistant en H, C₁-C₂₀-alkyle, C₁-C₂₀-alkylaryle, qui peut être substitué par des groupes fluoroalkyle, silane, siloxane, ester, amide, uréthane, éther, thioéther, disulfure, époxy ou des groupes insaturés, et X⁻ est choisi parmi le groupe consistant en Cl⁻, Br⁻, NO₃⁻, SO₄²⁻, CH₃OSO₃⁻, C₂H₅OSO₃⁻, CH₃SO₃⁻, H₂PO₄⁻ , HPO₄²⁻, PO₄³⁻, CO₃²⁻_{.}, CF₃COO⁻, HCOO⁻, CH₃COO⁻, C₂H₅COO⁻, lactate, tartrate et citrate.

7. Formulation selon la revendication précédente, **caractérisée en ce que** le monomère B1 est choisi parmi le groupe consistant en 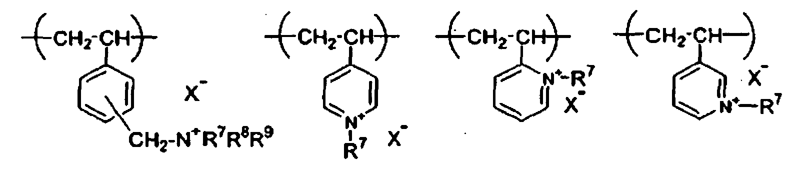 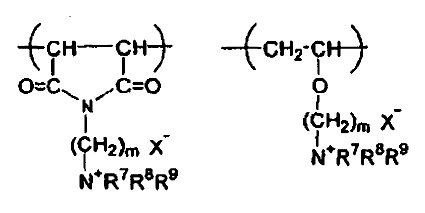 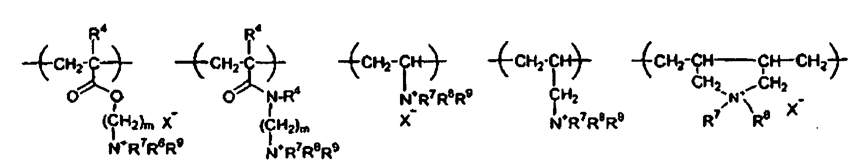 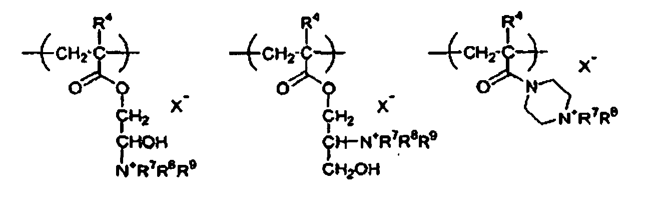 où les résidus R⁷, R⁸, R⁹, R¹⁰ sont choisis indépendamment les uns des autres parmi le groupe consistant en C₁-C₂₀-alkyle, C₁-C₂₀-alkylaryle, qui peut être substitué par des groupes fluoroalkyle, silane, siloxane, ester, amide, uréthane, éther, thioéther, disulfure, époxy ou des groupes insaturés, et X⁻ est choisi parmi le groupe consistant en Cl⁻, Br⁻, NO₃⁻, SO₄²⁻ CH₃OSO₃⁻, C₂H₅OSO₃⁻, CH₃SO₃⁻, H₂PO₄⁻, HPO₄²⁻, PO₄³⁻, CO₃²⁻, CF₃COO⁻, HCOO⁻, CH₃COO⁻, C₂H₅COO⁻, lactate, tartrate et citrate ainsi que m =2 à 12.

8. Formulation selon l'une quelconque des revendications précédentes, **caractérisée en ce que** le composant B est constitué d'au moins 80 % en poids de monomères B1 et B2.

9. Formulation selon l'une quelconque des revendications précédentes, **caractérisée en ce que** les composants A et B indépendamment l'un de l'autre présentent une masse molaire d'au moins 5000 g/mol.

10. Formulation selon l'une quelconque des revendications précédentes, **caractérisée en ce que** l'interaction de charge entre les composants A et B s'annule à un pH ≤ 10 ou à un pH ≤ 4.

11. Formulation selon l'une quelconque des revendications précédentes, **caractérisée en ce que** la teneur en polymère est d'au moins 5 % à 60 % en poids.

12. Formulation selon l'une quelconque des revendications précédentes, **caractérisée en ce que** le solvant est de l'eau.

13. Formulation selon l'une quelconque des revendications précédentes, **caractérisée en ce que** la formulation contient d'autres additifs.

14. Formulation selon la revendication précédente, **caractérisée en ce que** les additifs sont choisis parmi le groupe consistant en régulateurs de pH, tensioactifs, agent anti-mousse, biocides, absorbeurs d'UV, additifs de traitement hydrophobe et leurs mélanges.

15. Surface de façades intérieures ou extérieures ou accessoires figuratifs ou non figuratifs, avec un revêtement semiperméable qu'on peut produire à partir d'une formulation selon l'une quelconque des revendications précédentes.

16. Utilisation de la formulation selon l'une quelconque des revendications 1 à 14 pour la protection de surfaces à l'intérieure et à l'extérieure contre les salissures délibérées ou l'action de la pollution de l'air.

17. Utilisation de la formulation selon la revendication précédente en tant que revêtement anti-graffiti.
